# EUROPEAN PATENT SPECIFICATION

(11) **EP 2 176 331 B1**
(45) Date of publication and mention of the grant of the patent: **07.09.2016**
(21) Application number: 08796074.6
(22) Date of filing: 02.07.2008
(51) Int. Cl.: C08K 5/00, C08K 5/13, C08L 23/02, C08F 4/627, C08F 2/04, C08F 10/00

(54) **POLYMERIC COMPOSITIONS HAVING AN IMPROVED WHITNESS INDEX, PROCESS OF PRODUCING THE SAME, AND ARTICLES MADE THEREFROM**
POLYMERE ZUSAMMENSETZUNGEN MIT ERHÖHTEM WEISSGRAD, VERFAHREN ZU IHRER HERSTELLUNG UND ARTIKEL DARAUS
COMPOSITIONS POLYMÈRES AYANT UN INDICE DE BLANCHEUR AMÉLIORÉ, PROCÉDÉ POUR LA PRODUIRE ET ARTICLES FAITS AVEC CELLES-CI

(30) Priority: 31.07.2007 US 952961 P
(43) Date of publication of application: 21.04.2010
(73) Proprietor: Dow Global Technologies LLC, Midland, MI 48674 (US)
(72) Inventor: GAMBREL, Timothy, Lake Jackson, TX 77566 (US)
(74) Representative: Boult Wade Tennant
(86) International application number: PCT/US2008/069007
(87) International publication number: WO 2009/017930

(56) References cited:
- WO-A-92/12200
- WO-A-96/20974
- US-A- 3 438 935
- US-A- 3 549 572
- US-A- 3 870 680
- US-A- 3 931 103

## Description

### Field of Invention

The instant invention relates to a method of improving yellowness of a polymeric composition.

### Background of the Invention

In order to prolong the life of polymers, various stabilizers such as antioxidants and ultraviolet light absorbers are added to polymers. Exemplary antioxidants include, but are not limited to, sterically hindered phenol antioxidants and phosphite-based antioxidants. Typically, hindered phenols act as radical scavengers, also known as radical traps or chain breaking antioxidant, and they are characterized by a hydroxyl group flanked by two tertiary butyl substituents. In the polymer, the hydroxyl hydrogen atom is readily abstracted by macroalkyl radicals, thus terminating their propagation. The tertiary butyl substituents, in the ortho position to the hydroxyl group, provide stearic hindrance, preventing the newly formed phenoxyl radical from removing a hydrogen atom from the polymer chain. The phenoxyl radical can then be rearranged to scavenge another radical or can react with another phenoxyl radical or oxygen. Phenolic antioxidants are generally used with synergistic hydroperoxide decomposers such as organic phosphites. In some instances, however, polyolefins cannot be effectively stabilized even with the addition of such stabilizers. This usually occurs when the polyolefin is in contact with a metal, particularly copper, or contains within its composition certain metallic impurities, for example, catalyst residues. The end-result is that even though the stabilizers have been added, polyolefins decompose and lose their desirable physical properties sooner than expected.

In solution polyolefin polymerization, the polymerization typically takes place in the presence of a solvent. After the polymer is isolated, the solvent is recovered and then recycled back into the polymerization system via a solvent recovery unit including at least one heat exchanger and/or at least one vapor liquid separator drum. The solvent recovery unit is partially made of a nickel/copper alloy. The solvent typically comes into contact with the solvent recovery unit during the recovery stage. However, random periodic polymer discolorations have been observed that may be linked to use of copper containing solvent recovery units.

Despite the research efforts in developing stabilized polyolefins, there is still a need for a method of producing stabilized polyolefins having improved discoloration properties.

### Summary of the Invention

The instant invention is a method of improving yellowness index of a polymeric composition comprising the steps of:
selecting a copper free polymerization system;
polymerizing at least one or more α-olefins in a presence of a solvent via a solution polymerization reaction in said copper free polymerization system;
thereby producing a polyolefin polymer;
melt blending a phenolic antioxidant into said polyolefin polymer wherein said phenolic antioxidant is selected from the group consisting of octadecyl 3-(3,5-di-tert-butyl-4-hydroxyphenyl)propionate and 3,5-di-tert-butyl-4-hydroxy hydrocinnamate; and
thereby producing said polymeric composition, wherein said polymeric composition is free of copper, and said polymeric composition having a whiteness index according to ASTM-D 6290 of equal or greater than [(-0.73 X)+(Wᵢ)] where X is the number of days of accelerated aging, and Wᵢ is the initial whiteness index at 0 days of accelerated aging.

The phenolic antioxidant is selected from the group consisting of octadecyl 3-(3,5-di-tert-butyl-4-hydroxyphenyl)propionate ; and 3,5-di-tert- butyl-4-hydroxy hydrocinnamate.

In an alternative embodiment, the instant invention provides a method of improving yellowness index of a polymeric composition in accordance with any of the preceding embodiments, except that the polymeric composition further comprises a phosphite-based antioxidant.

In an alternative embodiment, the instant invention provides a method of improving yellowness of a polymeric composition in accordance with the preceding embodiment, except that the phosphite-base antioxidant is Tris(2,4-di-tert-butylphenyl)phosphite. In an alternative embodiment, the instant invention provides a method of improving yellowness of a polymeric composition in accordance with any of the preceding embodiments, except that the polymer is produced in multiple reactors in series where the final reactor in the reaction system operates non-isothermally.

In an alternative embodiment, the instant invention provides a method of improving yellowness of polymeric composition in accordance with the preceding embodiment, except that the final reactor in the reaction system is a continuously stirred or plug flow variety.

In an alternative embodiment, the instant invention provides a method of improving yellowness of a polymeric composition in accordance with any of the two preceding embodiments, except that there are no fresh reactants or catalyst being added in the final reactor.

In an alternative embodiment, the instant invention provides a method of improving yellowness of a polymeric composition in accordance with any of the three preceding embodiments, except that the penultimate reactor operates isothermally and at higher monomer concentration than the standard isothermal reactor conditions.

### Brief Description of the Drawings

For the purpose of illustrating the instant invention, there is shown in the drawings a form that is presently preferred; it being understood, however, that this invention is not limited to the precise arrangements and instrumentalities shown.

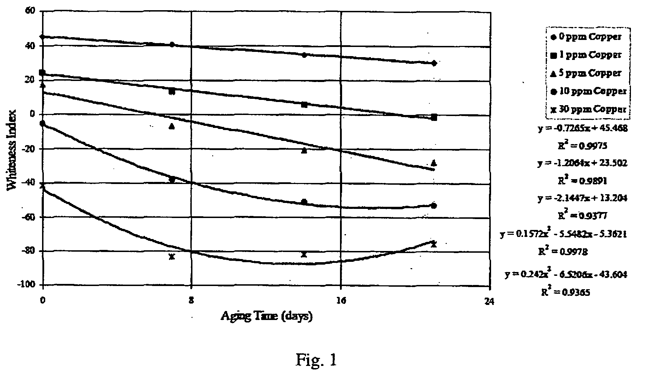

Fig. 1 is a graph illustrating the effects of increasing copper levels on whiteness index as a function of aging time.

### Detailed Description of the Invention

The instant invention is a method of improving yellowness of a polymeric composition.

The polymeric composition produced according to instant invention comprises:
(1) a polyolefin, wherein the polyolefin is the polymerization reaction product of at least one or more α-olefins in the presence of a solvent via a solution polymerization reaction in the absence of copper; and (2) a phenolic antioxidant as defined below.

The polyolefin may be any homopolymer and/or copolymer of one or more olefins. For example, the polyolefin may be a homopolymer of ethylene or a copolymer of ethylene with one or more α-olefins such as propylene, 1-butene, 1-pentene, 1-hexene, 1-heptene, 1-octene, 1-nonene, 1-decene, and 4-methyl- 1-pentene. In the alternative, the polyolefin may be a homopolymer of propylene or a copolymer of propylene with one or more α-olefins such as ethylene, 1-butene, 1-pentene, 1-hexene, 1-heptene, 1-octene, 1-nonene, 1-decene, and 4-methyl- 1 -pentene.

Phenolic antioxidants are selected from the group consisting of 3,5-di-tert-butyl-4-hydroxy hydrocinnamate, and octadecyl 3-(3,5-di-tert-butyl-4-hydroxyphenyl) propionate commercially available under the tradenames Irganox^{®} 1010 (CAS No. 6683-19-8), and Irganox^{®} 1076 (CAS No. 2082-79-3), respectively, from Ciba Specialty Chemicals Company.

The polymeric composition may comprise 200 to 800 parts by weight of the phenolic antioxidant per one million parts of the polymeric composition.

The polymeric composition may further include a phosphite-base antioxidant. Exemplary phosphite-based antioxidants include, but are not limited to, Tris(2,4-di-tert-butylphenyl) phosphite under the tradename Irgafos^{®} 168 commercially available from Ciba Specialty Chemicals Company. The polymeric composition may comprise 800 to 1500 parts by weight of the phosphite-base antioxidant per one million parts of the polymeric composition.

The polymeric composition is copper free.

The polymeric composition has a whiteness index according to ASTM-D 6290 of equal or greater than [(-0.73 X)+(Wᵢ)] where X is the number of days of accelerated aging, and Wᵢ is the initial whiteness index at 0 days of accelerated aging. For example, the polymeric composition may have an initial whiteness index of equal or greater than 40, for example, 45.5.

The method for improving the yellowness index of the polymeric composition according to instant invention includes the following steps: (1) selecting a copper free polymerization system; (2) polymerizing at least one or more α-olefins in the presence of a solvent via a solution polymerization reaction in the copper free polymerization system; (3) thereby producing a polyolefin polymer; (4) melt blending a phenolic antioxidant into the polyolefin polymer; and (5) thereby producing the polymeric composition, wherein the polymeric composition is free of copper and the polymeric composition further has a whiteness index according to ASTM-D 6290 of equal or greater than [(-0.73 X)+(Wᵢ)] where X is the number of days of accelerated aging, and Wᵢ is the initial whiteness index at 0 days of accelerated aging.

The instant invention is further described in connection with the polymerization of ethylene homopolymers and/or ethylene/α-olefin copolymers; however, the instant invention is not so limited, and it may be employed in the polymerization any olefin polymer and/or any olefin copolymers; for example, the instant invention may be employed in the polymerization propylene homopolymers or propylene/α-olefin copolymers.

In solution polymerization of linear low-density polyethylene, that is, an ethylene/α-olefin copolymer having a linear molecular structure, the polymerization, according to instant invention requires copolymerizing ethylene and one or more chosen comonomers, for example, one or more α-olefins, using a catalyst in a copper free polymerization system. Such catalysts are generally known to those of ordinary skill in the art. Exemplary catalysts include, but are not limited to, Ziegler/Natta catalysts, metallocene catalysts, constrained geometry catalysts, and/or single-site catalysts. The polymerization occurs in a well-stirred reactor such as loop reactors or sphere reactors at temperature in the range of 150°C. to 575°C, preferably in the range of 175°C. to 205°C, and at pressures in the range of 3.0 MPa to 5.0 MPa (435 psi to 725 psi). Ethylene, solvent, catalyst, and comonomers are fed continuously to the reactor. Exemplary solvents include, but are not limited to, isoparaffin, commercially under the tradename Isopar™ E from ExxonMobil Chemical Company, Houston, Texas. The mixture of polymer and solvent is removed from the reactor. The polymer is isolated, and further compounded. The solvent is recovered via a solvent recovery unit including at least one heat exchanger and at least one vapor liquid separator drum, and it is then recycled back into the polymerization system. One or more antioxidants may further be compounded into the polymer, and compounded polymer may then be pelletized. The compounded polymer may contain any amount of one or more antioxidant. For example, the compounded polymer may comprise 200 to 600 parts of one or more phenolic antioxidant per one million parts of the polymer. In addition, the compounded polymer may comprise 800 to 1200 parts of a phosphite-based antioxidant per one million parts of polymer. The compounded polymer may further comprise 200 to 1500 parts of calcium stearate per one million parts of polymer.

The polymerization system is copper free. For example, the polymerization system may be made fully or partially from a metal or a metal alloy free of any copper. Such metal alloys are well known to those skilled in the art; for example, the metal alloy may be alloy steels containing high percentages of chromium such as stainless steel. The solvent recovery unit including at least one heat exchanger and/or at least one vapor liquid separator drum of the copper free polymerization system is also preferably copper free. The solvent recovery unit including at least one heat exchanger and/or at least one vapor liquid separator drum is preferably made from a metal or a metal alloy free of copper. As mentioned above, such metals and metal alloys are well known to those skilled in the art; for example, the metal alloy may be alloy steels containing high percentages of chromium such as stainless steel.

The polymeric composition produced by the above-described method can be used for producing articles. Different processes may be employed to form different articles. Such processes include, but are not limited, to injection molding, injection blow molding, rotational molding, blown film process, cast film process, thermoforming process, and/or, extrusion coating. Exemplary articles include, but are not limited to, bottles, caps, containers, films, fibers, foams, sheets, extruded coated articles, and/or packaging articles. In order to show the detrimental effects of copper presence, polyethylene composition samples 1-5 containing different amounts of copper stearate were prepared. The polyethylene composition samples 1-5 included heterogeneously branched linear low-density copolymer of ethylene and octene having a density in the range of 0.92 g/cm³ according to ASTM-D 792 and a melt index in the range of 1.0 according to ASTM-D 1238, which is commercially available under the tradename DOWLEX™ 2045 from The Dow^{(™)} Chemical Company. The formulations for these heterogeneously branched linear low-density copolymer of ethylene and octene samples are shown in Table I. The samples were prepared according to the following procedure. 0.015 g of copper stearate having a MW of approximately 630.46 was dry mixed with 50 g of DOWLEX^{™} 2045 thereby forming a 30 ppm copper/polyethylene batch material. The batch material was then blended with the appropriate amount of base resin, that is, DOWLEX^{™} 2045, to form uniform polyethylene composition samples 1-5 via a Haake Polylab bowl mixer. The polyethylene composition samples 1-5 were then pressed into plaques via a Tetrahedron Model 0801 press using carbon steel metal plates, and aged in an oven at 70°C. for 21 days. The samples were tested for whiteness index according to ASTM D-6290 every 7 days, and the results are shown in Fig. 1.

### Test Methods

Test methods include the following:
The whiteness index was measured according to ASTM-D 6290.

**Table I**

| | Sample 1 | Sample 2 | Sample 3 | Sample 4 | Sample 5 |
|---|---|---|---|---|---|
| Polymer | DOWLEX™ 2045 | DOWLEX™ 2045 | DOWLEX™ 2045 | DOWLEX™ 2045 | DOWLEX™ 2045 |
| Irganox™ 1010 (ppm) | 200 | 200 | 200 | 200 | 200 |
| Irganox™ 176 (ppm) | 250 | 250 | 250 | 250 | 250 |
| Irgafos™ 168 (ppm) | 1000 | 1000 | 1000 | 1000 | 1000 |
| Copper (ppm) | 0 | 1 | 5 | 10 | 30 |

## Claims

1. A method of improving yellowness index of a polymeric composition comprising the steps of:
selecting a copper free polymerization system;
polymerizing at least one or more α-olefins in a presence of a solvent via a solution polymerization reaction in said copper free polymerization system;
thereby producing a polyolefin polymer;
melt blending a phenolic antioxidant into said polyolefin polymer wherein said phenolic antioxidant is selected from the group consisting of octadecyl 3-(3,5-di-tert-butyl-4-hydroxyphenyl)propionate and 3,5-di-tert-butyl-4-hydroxy hydrocinnamate; and
thereby producing said polymeric composition, wherein said polymeric composition is free of copper, and said polymeric composition having a whiteness index according to ASTM- D 6290 of equal or greater than [(-0.73 X)+(Wᵢ)] where X is the number of days of accelerated aging, and Wᵢ is the initial whiteness index at 0 days of accelerated aging.

2. The method according to Claim 1, wherein said polymeric composition further comprises a phosphite-based antioxidant.

3. The method according to Claim 2, wherein said phosphite-base antioxidant is Tris(2,4-di-tert-butylphenyl)phosphite.

4. The method according to claim 1, wherein Wi is equal or greater than 40.

## Patentansprüche

1. Ein Verfahren zum Verbessern des Vergilbungsindex einer polymeren Zusammensetzung, das die folgenden Schritte beinhaltet:
Auswählen eines kupferfreien Polymerisationssystems;
Polymerisieren mindestens eines oder mehrerer α-Olefine in Gegenwart eines Lösungsmittels über eine Lösungspolymerisationsreaktion in dem kupferfreien Polymerisationssystem;
dadurch Produzieren eines Polyolefinpolymers;
Schmelzmischen eines phenolischen Antioxidationsmittels in das Polyolefinpolymer, wobei das phenolische Antioxidationsmittel aus der Gruppe ausgewählt ist, die aus Octadecyl-3-(3,5-di-tert-butyl-4-hydroxyphenyl)propionat und 3,5-Di-tert-butyl-4-hydroxyhydrocinnamat besteht; und
dadurch Produzieren der polymeren Zusammensetzung, wobei die polymere Zusammensetzung frei von Kupfer ist, und wobei die polymere Zusammensetzung einen Weißgrad gemäß ASTM-D 6290 von gleich oder größer als [(-0,73 X) + (Wᵢ)] aufweist, wobei X die Anzahl Tage beschleunigter Alterung ist und Wᵢ der anfängliche Weißgrad bei 0 Tagen beschleunigter Alterung ist.

2. Verfahren gemäß Anspruch 1, wobei die polymere Zusammensetzung ferner ein Antioxidationsmittel auf Phosphitbasis beinhaltet.

3. Verfahren gemäß Anspruch 2, wobei das Antioxidationsmittel auf Phosphitbasis Tris(2,4-di-tert-butylphenyl)phosphit ist.

4. Verfahren gemäß Anspruch 1, wobei Wᵢ gleich oder größer als 40 ist.

## Revendications

1. Une méthode d'amélioration de l'indice de jaunissement d'une composition polymérique comprenant les étapes consistant :
à sélectionner un système de polymérisation exempt de cuivre ;
à polymériser au moins une ou plusieurs α-oléfines en présence d'un solvant via une réaction de polymérisation en solution dans ledit système de polymérisation exempt de cuivre ;
à produire de ce fait un polymère polyoléfinique ;
à mélanger de façon homogène à l'état fondu un antioxydant phénolique dans ledit polymère polyoléfinique, ledit antioxydant phénolique étant sélectionné dans le groupe constitué d'octadécyl 3-(3,5-di-tert-butyl-4-hydroxyphényl)propionate et de 3,5-di-tert-butyl-4-hydroxy hydrocinnamate ; et
à produire de ce fait ladite composition polymérique, ladite composition polymérique étant exempte de cuivre, et ladite composition polymérique ayant un indice de blancheur selon l'ASTM-D 6290 égal ou supérieur à [(-0,73 X)+(Wᵢ)] où X est le nombre de jours de vieillissement accéléré, et Wᵢ est l'indice de blancheur initial à 0 jour de vieillissement accéléré.

2. La méthode selon la revendication 1, dans laquelle ladite composition polymérique comprend en sus un antioxydant à base de phosphite.

3. La méthode selon la revendication 2, dans laquelle ledit antioxydant à base de phosphite est le Tris(2,4-di-tert-butylphényl)phosphite.

4. La méthode selon la revendication 1, dans laquelle Wᵢ est égal ou supérieur à 40.
